# EUROPEAN PATENT APPLICATION

(11) **EP 4 068 468 A1**
(43) Date of publication of application: **05.10.2022**
(21) Application number: 22164841.3
(22) Date of filing: 28.03.2022
(51) Int. Cl.: H01M 10/613, H01M 10/625, H01M 10/6554, H01M 10/6556, H01M 10/6567, H01M 50/211, H01M 50/249, H01M 10/04, H01M 50/503, H01M 10/647

(54) **BATTERY PACK AND VEHICLE**

(30) Priority: 30.03.2021 JP 2021057932
(71) Applicant: TOYOTA JIDOSHA KABUSHIKI KAISHA, Toyota-shi, Aichi-ken, 471-8571 (JP)
(72) Inventor: TOFUKUJI, Satoko, Toyota-shi, 471-8571 (JP)
(74) Representative: D Young & Co LLP

(57) **Abstract**

The battery pack (4) includes: a first battery module (42) and a second battery module (44) each including multiple battery cells that are stacked together; and a cooler (43). The cooler (43) is located between the first battery module (42) and the second battery module (44), is configured to cool the first battery module (42) and the second battery module (44), and includes an electrically conductive member.

## Description

### BACKGROUND OF THE INVENTION

### 1. Field of the Invention

The present disclosure relates to battery packs and vehicles.

### 2. Description of Related Art

Japanese Patent No. 4374947 (JP 4374947 B) discloses a technique for cooling cells by attaching air-cooling cooling tabs to both ends of at least one cell in a stacked bipolar secondary battery including multiple cells that are connected in series and stacked together.

### SUMMARY OF THE INVENTION

In secondary batteries, battery modules including multiple battery cells that are stacked together can be cooled by placing a cooler between the battery modules. However, there is a possibility that the battery modules may not be electrically connected to each other if the cooler is simply placed between the battery modules.

The present disclosure provides a battery pack and a vehicle in which battery modules can be electrically connected to each other even when a cooler is placed between the battery modules.

A battery pack according to a first aspect of the present disclosure includes: a first battery module and a second battery module each including multiple battery cells that are stacked together; and a cooler located between the first battery module and the second battery module, configured to cool the first battery module and the second battery module, and including an electrically conductive member.

In the battery pack according to the first aspect of the present disclosure, the cooler may be in contact with and connected to the first battery module and the second battery module.

According to the battery pack of the first aspect of the present disclosure, the cooler is in contact with and connected to the first battery module and the second battery module. Therefore, the cooler can directly cool the first battery module and the second battery module.

In the battery pack according to the first aspect of the present disclosure, the cooler may include a plurality of flow paths through which a cooling medium circulates. The flow paths may be located within a projected area that is defined by projecting the first battery module and the second battery module on a plane perpendicular to a direction in which the battery cells are stacked.

According to the battery pack of the first aspect of the present disclosure, the flow paths are located within the projected area that is defined by projecting the first battery module and the second battery module on a plane perpendicular to the direction in which the battery cells are stacked. Therefore, the size of the battery pack can be reduced.

In the battery pack according to the first aspect of the present disclosure, the cooler may be located on the first battery module. The second battery module may be located on the cooler.

According to the battery pack of the first aspect of the present disclosure, the cooler is located on the first battery module, and the second battery module is located on the cooler. Therefore, the plurality of battery modules can be cooled by the single cooler.

In the battery pack according to the first aspect of the present disclosure, the first battery module and the second battery module may include an active material coated region coated with an active material. An area of a surface of the cooler that is perpendicular to the direction in which the battery cells are stacked may be equal to or larger than an area of the active material coated region.

According to the battery pack of the first aspect of the present disclosure, the area of the surface of the cooler that is perpendicular to the direction in which the battery cells are stacked is equal to or larger than the area of the active material coated region. Therefore, the cooler can cool heat generation regions of the battery cells.

In the battery pack according to the first aspect of the present disclosure, the cooler may be connected via a connector portion made of a non-electrically conductive material to a cooling pipe configured to supply a cooling medium.

According to the battery pack of the first aspect of the present disclosure, the cooler is connected via the connector portion made of a non-electrically conductive material to the cooling pipe configured to supply the cooling medium, and the connector portion electrically insulates between the cooler and the cooling pipe. Therefore, the vehicle can be electrically insulated from the battery modules.

In the battery pack according to the first aspect of the present disclosure, the cooler may be connected to a cooling pipe configured to supply a cooling medium. The cooling pipe may be made of a non-electrically conductive material.

According to the battery pack of the first aspect of the present disclosure, the cooler is connected to the cooling pipe configured to supply the cooling medium, the cooling pipe is made of a non-electrically conductive material, and the cooling pipe is electrically insulated from the cooler. Therefore, the vehicle can be electrically insulated from the battery modules.

In the battery pack according to the first aspect of the present disclosure, the cooler may be connected to a cooling pipe configured to supply a cooling medium. The cooling pipe may be connected to a heat exchanger via a connector portion made of a non-electrically conductive material.

According to the battery pack of the first aspect of the present disclosure, the cooler is connected to the cooling pipe configured to supply the cooling medium, and the cooling pipe is connected to the heat exchanger via the connector portion made of a non-electrically conductive material. Since the connector portion electrically insulates between the heat exchanger and the cooling pipe, the vehicle can be electrically insulated from the battery modules.

In the battery pack according to the first aspect of the present disclosure, the cooler may be connected to a cooling pipe configured to supply a cooling medium. The cooling pipe may include an insulating coating provided on a surface of the cooling pipe by insulation painting or anodizing.

According to the battery pack of the first aspect of the present disclosure, the cooler is connected to the cooling pipe configured to supply the cooling medium, the cooling pipe includes an insulating coating provided on the surface of the cooling pipe by insulation painting or anodizing, and the insulating coating electrically insulates between the cooler and the cooling medium. Therefore, the vehicle can be electrically insulated from the battery modules.

In the battery pack according to the first aspect of the present disclosure, the cooler may include a plurality of flow paths through which a cooling medium circulates.

According to the battery pack of the first aspect of the present disclosure, the cooler includes a plurality of flow paths through which the cooling medium circulates. Therefore, the flow paths can cool the first battery module and the second battery module.

In the battery pack according to the first aspect of the present disclosure, the cooler may include an insulating coating provided on an inner peripheral surface of each of the flow paths by insulation painting or anodizing.

In the battery pack according to the first aspect of the present disclosure, the cooling medium may be an insulating cooling medium.

According to the battery pack of the first aspect of the present disclosure, the cooling medium is an insulating cooling medium, and therefore the cooling pipe and the cooling medium are electrically insulated from each other. Accordingly, the vehicle can be electrically insulated from the battery modules.

In the battery pack according to the first aspect of the present disclosure, the cooler may be connected to a cooling pipe configured to supply the cooling medium. The cooling pipe may be connected to a heat exchanger including an insulating coating provided by insulation painting or anodizing on an inner peripheral surface of a flow path of the heat exchanger through which the cooling medium flows.

According to the battery pack of the first aspect of the present disclosure, the cooler is connected to the cooling pipe configured to supply the cooling medium, and the cooling pipe is connected to the heat exchanger including an insulating coating provided by insulation painting or anodizing on the inner peripheral surface of the flow path of the heat exchanger through which the cooling medium flows. Since the heat exchanger and the cooling medium are electrically insulated from each other, the vehicle can be electrically insulated from the battery modules.

In the battery pack according to the first aspect of the present disclosure, the electrically conductive member may be configured to be electrically connected to the first battery module and the second battery module.

According to the battery pack of the first aspect of the present disclosure, the electrically conductive member is electrically connected to the first battery module and the second battery module. Therefore, the cooler can directly cool the first battery module and the second battery module, and the size of the battery pack can be reduced.

In the battery pack according to the first aspect of the present disclosure, the cooling medium may be a liquid.

According to the battery pack of the first aspect of the present disclosure, the cooling medium is a liquid. Therefore, the first battery module and the second battery module can be cooled better than air cooling.

A vehicle according to a second aspect of the present disclosure includes a battery pack. The battery pack includes: a first battery module and a second battery module each including multiple battery cells that are stacked together; and a cooler located between the first battery module and the second battery module, configured to cool the first battery module and the second battery module, and including an electrically conductive member.

According to the present disclosure, since the cooler includes an electrically conductive member, the battery modules can be electrically connected to each other even when the cooler is placed between the battery modules.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a schematic configuration of a vehicle equipped with a battery pack according to an embodiment;
FIG. 2 is a perspective view showing a schematic configuration of the battery pack according to the embodiment;
FIG. 3 is a sectional view taken along line III-III in FIG. 2;
FIG. 4 is a top view of a battery cell of a first battery module or a second battery module according to the embodiment;
FIG. 5 is a sectional view taken along line V-V in FIG. 4 in the case where a bipolar structure is used for battery cells of the first battery module and the second battery module according to the embodiment;
FIG. 6 is a sectional view taken along line V-V of FIG. 4 in the case where a monopolar structure is used for the battery cells of the first battery module according to the embodiment;
FIG. 7 schematically shows a state of an electrical conduction path including the battery modules according to the embodiment;
FIG. 8 is a sectional view of a second cooler according to the embodiment;
FIG. 9 schematically shows a state of a path in the electrical conduction path including the first battery module and the second battery module according to a first modification of the embodiment; and
FIG. 10 schematically shows a state of a path in the electrical conduction path including the first battery module and the second battery module according to a second modification of the embodiment.

### DETAILED DESCRIPTION OF EMBODIMENTS

Hereinafter, a battery pack according to an embodiment of the present disclosure will be described with reference to the drawings. The present disclosure is not limited by the following embodiment. In the following description, the same portions are denoted by the same signs.

### Schematic Configuration of Vehicle

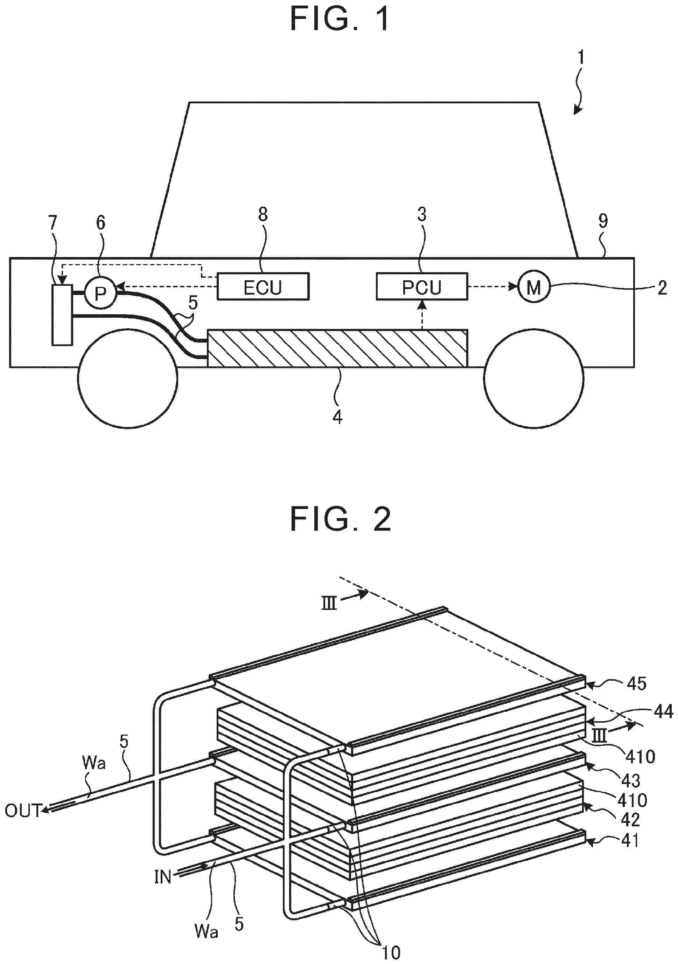

FIG. 1 shows a schematic configuration of a vehicle equipped with the battery pack according to the embodiment. A vehicle 1 shown in FIG. 1 is assumed to be an electrified vehicle (EV) or plug-in hybrid electric vehicle (PHEV) using a motor etc. as a power source.

The vehicle 1 includes a motor 2, a power control unit (PCU) 3, a battery pack 4, a cooling pipe 5, an electric pump 6, a heat exchanger 7, an electronic control unit (ECU) 8, and a vehicle body 9.

The motor 2 is powered by the battery pack 4 to output traction power. The motor 2 is electrically connected to the battery pack 4 via the PCU 3. In the vehicle 1, the power output from the motor 2 is transmitted to drive wheels via a transmission system.

The PCU 3 drives and controls the motor 2. The PCU 3 includes at least an inverter that drives the motor 2, a boost converter, and a direct current to direct current (DC-to-DC) converter. For example, the PCU 3 converts the DC power of the battery pack 4 to alternating current (AC) power by the inverter and supplies the AC power to the motor 2.

The battery pack 4 stores electric power to be supplied to the motor 2. Specifically, the battery pack 4 is an energy storage device that can store electric power supplied from an external power source. The battery pack 4 is electrically connected to a charging plug of external charging equipment via a charging inlet (not shown) of the vehicle 1, and is charged with electric power supplied from the charging equipment. The battery pack 4 is composed of a battery module including multiple flat cells, each in the shape of a flat plate, that are vertically stacked together, and a cooler for cooling the battery module. The detailed configuration of the battery pack 4 will be described later.

The battery pack 4, the electric pump 6, and the heat exchanger 7 are connected to a flow path of the cooling pipe 5, and a cooling medium for cooling a first battery module 42 and a second battery module 44, which will be described later, circulates in the cooling pipe 5. The cooling medium is water, mineral oil, synthetic oil, silicone oil, or fluorine oil. An example in which the cooling medium is water will be described in the embodiment. The cooling pipe 5 is made of an electrically conductive material. Specifically, the cooling pipe 5 is made of, for example, aluminum.

The electric pump 6 circulates the cooling medium in the cooling pipe 5 as controlled by the ECU 8. Specifically, the electric pump 6 sucks the cooling medium stored in a reserve tank and discharges the cooling medium from its discharge port into the cooling pipe 5. The cooling medium discharged by the electric pump 6 circulates through the cooling pipe 5, the battery pack 4, and the heat exchanger 7 by the discharge pressure of the electric pump 6.

The heat exchanger 7 dissipates heat from the cooling medium by exchanging heat with the cooling medium circulating in the cooling pipe 5, as controlled by the ECU 8. The heat exchanger 7 is composed of, for example, a radiator and an electric fan.

The ECU 8 controls driving of the electric pump 6 and the heat exchanger 7. The ECU 8 is composed of a memory and a processor having hardware such as a central processing unit (CPU).

### Detailed Configuration of Battery

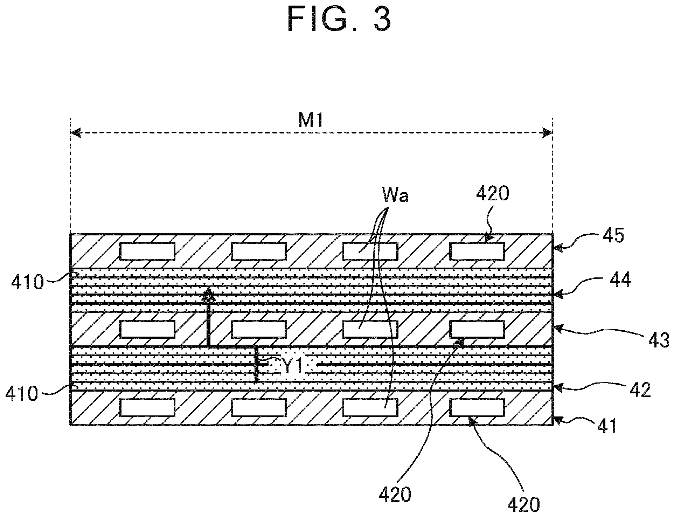

Next, the detailed configuration of the battery pack 4 will be described. FIG. 2 is a perspective view showing a schematic configuration of the battery pack 4. FIG. 3 is a sectional view taken along line III-III in FIG. 2.

As shown in FIGS. 2 and 3, the battery pack 4 includes a first cooler 41, the first battery module 42, a second cooler 43, the second battery module 44, and a third cooler 45. As shown in FIGS. 2 and 3, the battery pack 4 is formed by stacking the first cooler 41, the first battery module 42, the second cooler 43, the second battery module 44, and the third cooler 45 on top of each other in this order in electrical contact with each other.

### Battery Module Structure

First, the detailed configurations of the first battery module 42 and the second battery module 44 will be described. Each of the first battery module 42 and the second battery module 44 is formed by stacking a plurality of battery cells 410 each in the shape of a flat plate on top of each other (see FIGS. 2 and 3). Either a bipolar structure or a monopolar structure is used for the battery cells 410 of the first battery module 42 and the second battery module 44.

### Bipolar Structure

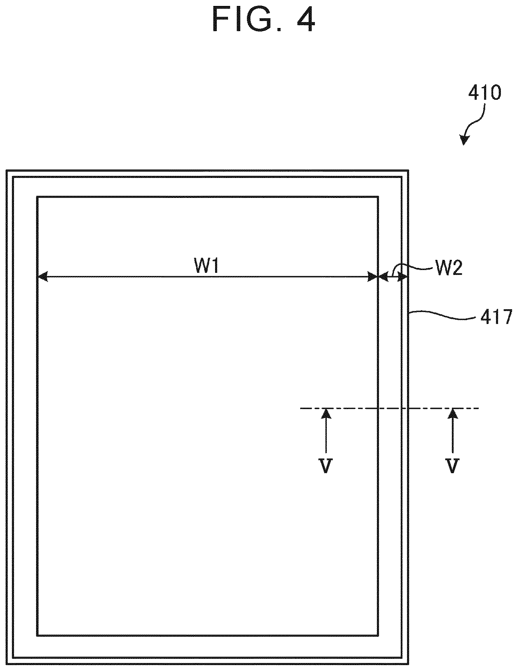

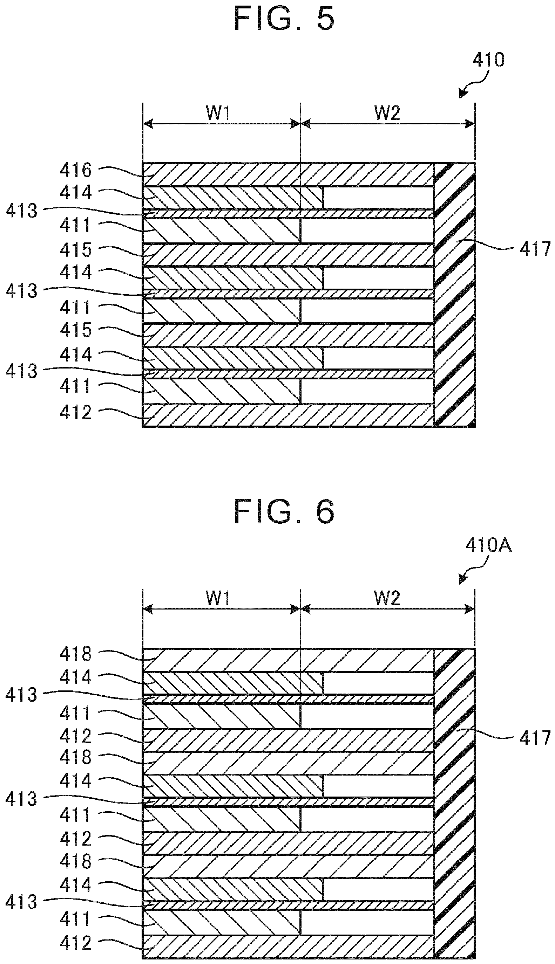

First, an example in which a bipolar structure is used for the battery cells 410 of the first battery module 42 and the second battery module 44 will be described. FIG. 4 is a top view of a battery cell 410 of the first battery module 42 or the second battery module 44. FIG. 5 is a sectional view taken along line V-V in FIG. 4 in the case where a bipolar structure is used for the battery cells 410 of the first battery module 42 and the second battery module 44.

As shown in FIGS. 4 and 5, the battery cell 410 with a bipolar structure is formed by stacking electrode foils and separators on top of each other in the following order: a first electrode foil 412 having its front side (one side) coated with a positive electrode active material 411, a separator 413, an intermediate electrode foil 415 having its back side coated with a negative electrode active material 414 and its front side coated with a positive electrode active material 411, a separator 413, an intermediate electrode foil 415 having its back side coated with a negative electrode active material 414 and its front side coated with a positive electrode active material 411, a separator 413, and a second electrode foil 416 having its back side (one side) coated with a negative electrode active material 414. In FIG. 5, the stack includes two intermediate electrode foils 415. However, any number of separators 413 and any number of intermediate electrode foils 415 may be stacked between the first electrode foil 412 and the second electrode foil 416. Each of the first electrode foil 412, the intermediate electrode foils 415, and the second electrode foil 416 is made of, for example, aluminum. Each battery cell 410 has a seal portion 417 made of, for example, a resin. The seal portion 417 protects the outer periphery of the battery cell 410.

A part of the battery cell 410 in which the positive electrode active material 411 and the negative electrode active material 414 face each other in the first electrode foil 412, the intermediate electrode foils 415, and the second electrode foil 416 serves as an active material coated region W1 (heat generation region). A part of the battery cell 410 including the seal portion 417 and a region that is coated with neither the positive electrode active material 411 nor the negative electrode active material 414, or that is coated with only one of the positive electrode active material 411 and the negative electrode active material 414 serves as an active material non-coated region W2 (non-heat generation region).

### Monopolar Structure

Next, an example in which a monopolar structure is used for the battery cells 410 of the first battery module 42 will be described. FIG. 6 is a sectional view taken along line V-V in FIG. 4 in the case where a monopolar structure is used for the battery cells 410 of the first battery module 42.

As shown in FIGS. 4 and 6, a battery cell 410A with a monopolar structure is formed by stacking a plurality of pairs of electrode foils with a separator therebetween on top of each other. Each pair of electrode foils consists of a first electrode foil 412 having its front side (one side) coated with a positive electrode active material 411, and a second electrode foil 418 having its back side coated with a negative electrode active material 414, and a separator 413 is interposed between the first electrode foil 412 and the second electrode foil 418. The first electrode foils 412 are made of, for example, aluminum. The second electrode foils 418 are made of, for example, copper. The battery cell 410A includes a seal portion 417 made of, for example, a resin. The seal portion 417 protects the outer periphery of the battery cell 410A.

A part of the battery cell 410A in which the positive electrode active material 411 and the negative electrode active material 414 face each other in the first electrode foils 412 and the second electrode foils 418 serves as an active material coated region W1 (heat generation region). A part of the battery cell 410A including the seal portion 417 and a region that is coated with neither the positive electrode active material 411 nor the negative electrode active material 414, or that is coated with only one of the positive electrode active material 411 and the negative electrode active material 414 serves as an active material non-coated region W2 (non-heat generation region).

### Cooler Structure

Next, the structures of the first cooler 41, the second cooler 43, and the third cooler 45 will be described. As shown in FIGS. 2 and 3, the first cooler 41, the second cooler 43, and the third cooler 45 are connected to the cooling pipe 5 via connector portions 10. Each of the first cooler 41, the second cooler 43, and the third cooler 45 has a plurality of flow paths 420 in which a cooling medium Wa supplied from the electric pump 6 through the cooling pipe 5 and the connector portion 10 circulates. Each of the first cooler 41, the second cooler 43, and the third cooler 45 is composed of an electrically conductive member such as aluminum, and has the shape of a thick plate.

For each of the first cooler 41, the second cooler 43, and the third cooler 45, the area of the surface perpendicular to the direction in which the battery cells 410 are stacked is equal to or larger than the area of the active material coated region W1 of the first battery module 42 and the second battery module 44. The flow paths 420 are located within a projected area M1 that is defined by projecting the first battery module 42 and the second battery module 44 on a plane perpendicular to the direction in which the battery cells 410 are stacked (see FIG. 3).

Since each of the first cooler 41 and the third cooler 45 is composed of an electrically conductive member, the first cooler 41 and the third cooler 45 are electrically connected to the first battery module 42, the second cooler 43, and the second battery module 44 in the direction in which the battery cells 410 are stacked (see arrow Y1 in FIG. 3). The first cooler 41 and the third cooler 45 therefore function as electrodes (current collectors) for the first battery module 42 and the second battery module 44. That is, the electrically conductive members that form the first cooler 41, the second cooler 43, and the third cooler 45 are electrically connected to the first battery module 42 and the second battery module 44 in the direction in which the battery cells 410 are stacked. Since terminals for outputting electric power need not be separately provided for the first battery module 42 and the second battery module 44, the size of the battery pack 4 can be reduced.

### State of Electrical Conduction Path

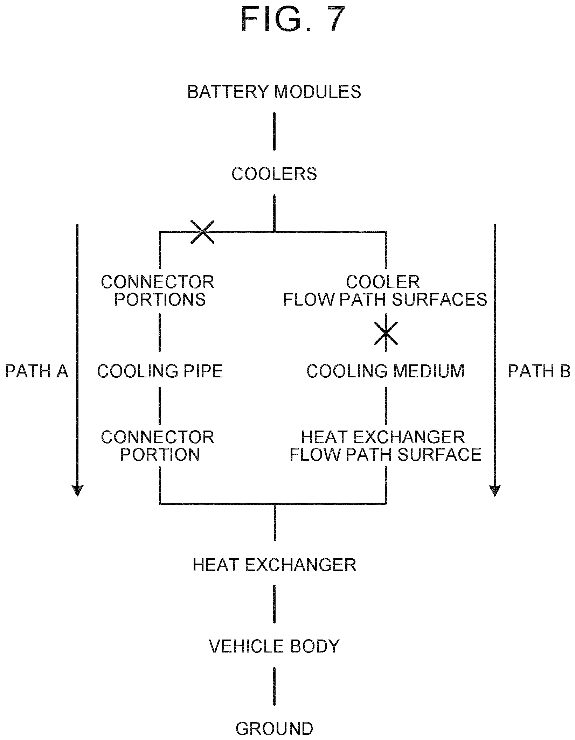

Next, the state of an electrical conduction path including the first battery module 42 and the second battery module 44 will be described in detail. FIG. 7 schematically shows the state of the electrical conduction path including the first battery module 42 and the second battery module 44.

As shown in FIG. 7, the vehicle 1 has a path A and a path B through which electricity can be conducted from the first battery module 42 and the second battery module 44 to the vehicle body 9. Accordingly, the vehicle body 9 of the vehicle 1 is electrically insulated from the high voltage first battery module 42 and the high voltage second battery module 44 by placing a non-electrically conductive material in each of the path A and the path B shown in FIG. 7.

First, the path A will be described. As shown in the path A of FIG. 7, in the vehicle 1, each of the first cooler 41, the second cooler 43, and the third cooler 45 is connected to the cooling pipe 5 via the connector portion 10 made of a non-electrically conductive material. That is, in the vehicle 1, the connector portions 10 can electrically insulate between each of the first cooler 41, the second cooler 43, and the third cooler 45 and the cooling pipe 5 in the path A of FIG. 7.

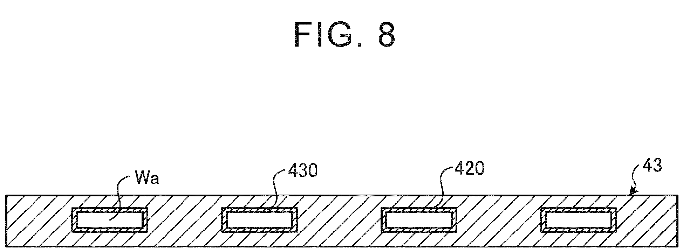

Next, the path B will be described. FIG. 8 is a sectional view of the second cooler 43. Since the first cooler 41 and the third cooler 45 have a configuration similar to that of the second cooler 43, the second cooler 43 will be described below. As shown in the path B of FIG. 7 and in FIG. 8, in the vehicle 1, each of the flow paths 420 of the second cooler 43 has an insulating coating 430 formed on its inner peripheral surface by insulation painting or anodizing. In the vehicle 1, the insulating coatings 430 can thus electrically insulate between the cooling medium Wa and the surfaces of the flow paths 420 of the second cooler 43 in the path B of FIG. 7.

As described above, in the vehicle 1, the connector portions 10 electrically insulate between each of the first cooler 41, the second cooler 43, and the third cooler 45 and the cooling pipe 5 in the path A of FIG. 7, and the insulating coatings 430 electrically insulate between each of the first cooler 41, the second cooler 43, and the third cooler 45 and the cooling medium Wa in the path B of FIG. 7. As a result, the vehicle body 9 of the vehicle 1 can be electrically insulated from the high voltage battery pack 4.

According to the embodiment described above, the second cooler 43 is composed of an electrically conductive member. Therefore, the first battery module 42 and the second battery module 44 can be electrically connected to each other even when the liquid-cooling second cooler 43 is located between the first battery module 42 and the second battery module 44.

Moreover, according to the embodiment, self-discharge from the first battery module 42 and the second battery module 44 can be reduced.

According to the embodiment, the second cooler 43 is in contact with and connected to the first battery module 42 and the second battery module 44. Therefore, the second cooler 43 can directly cool the first battery module 42 and the second battery module 44, and thermal resistance from the cooling medium Wa to the battery modules can be reduced.

According to the embodiment, the flow paths 420 of the second cooler 43 are located within the projected area M1 that is defined by projecting the first battery module 42 and the second battery module 44 on a plane perpendicular to the direction in which the battery cells 410 are stacked. Therefore, the size of the battery pack 4 can be reduced.

According to the embodiment, the second cooler 43 is located on the first battery module 42, and the second battery module 44 is located on the second cooler 43. Therefore, both of the first battery module 42 and the second battery module 44 can be cooled by the second cooler 43.

According to the embodiment, the area of the surface of the second cooler 43 that is perpendicular to the direction in which the battery cells 410 are stacked is equal to or larger than the area of the active material coated region W1. Therefore, the second cooler 43 can cool the heat generation regions of the battery cells 410.

According to the embodiment, the second cooler 43 is connected via the connector portion 10 made of a non-electrically conductive material to the cooling pipe 5 for supplying the cooling medium Wa, and the connector portion 10 electrically insulates between the second cooler 43 and the cooling pipe 5. Therefore, the vehicle body 9 can be electrically insulated from the first battery module 42 and the second battery module 44.

According to the embodiment, each of the flow paths 420 of the first cooler 41, the second cooler 43, and the third cooler 45 has the insulating coating 430 formed on its inner peripheral surface by insulation painting or anodizing, and the insulating coating 430 electrically insulates between the surface of the flow path 420 and the cooling medium Wa. Therefore, the vehicle body 9 can be electrically insulated from the high voltage first battery module 42 and the high voltage second battery module 44.

According to the embodiment, the electrically conductive members that form the first cooler 41, the second cooler 43, and the third cooler 45 are electrically connected to the first battery module 42 and the second battery module 44. Therefore, the first cooler 41, the second cooler 43, and the third cooler 45 can directly cool the first battery module 42 and the second battery module 44, and the size of the battery pack 4 can be reduced.

According to the embodiment, the cooling medium Wa is a liquid. Therefore, the first battery module 42 and the second battery module 44 can be cooled better than air cooling.

In the embodiment, the cooling pipe 5 may be made of a non-electrically conductive material such as rubber to electrically insulate the vehicle body 9 from the first battery module 42 and the second battery module 44. That is, in the vehicle 1, the cooling pipe 5 made of a non-electrically conductive material can electrically insulate between each of the first cooler 41, the second cooler 43, and the third cooler 45 and the heat exchanger 7 in the path A of FIG. 7. As a result, the vehicle body 9 can be electrically insulated from the high voltage first battery module 42 and the high voltage second battery module 44.

In the embodiment, the heat exchanger 7 and the cooling pipe 5 may be connected via a connector portion 10 to electrically insulate the vehicle body 9 from the first battery module 42 and the second battery module 44. That is, in the vehicle 1, the connector portion 10 made of a non-electrically conductive material can electrically insulate between the cooling pipe 5 and the heat exchanger 7 in the path A of FIG. 7. As a result, the vehicle body 9 can be electrically insulated from the high voltage first battery module 42 and the high voltage second battery module 44.

In the embodiment, water is used as a cooling medium that is supplied to the first cooler 41, the second cooler 43, and the third cooler 45. However, the cooling medium is not limited to water, and the cooling medium Wa may be an insulating cooling medium. Specific examples of the insulating cooling medium include chlorofluorocarbon (CFC) alternative cooling media such as R134a and insulating oil. The surfaces of the flow paths 420 of the first cooler 41, the second cooler 43, and the third cooler 45 can thus be electrically insulated from the cooling medium Wa in the path B of FIG. 7. As a result, the vehicle body 9 can be electrically insulated from the high voltage first battery module 42 and the high voltage second battery module 44.

In the embodiment, an insulating coating may be formed on the inner peripheral surface of a flow path of the heat exchanger 7 through which the cooling medium Wa flows by insulation painting or anodizing. The surface of the flow path of the heat exchanger 7 can thus be electrically insulated from the cooling medium Wa in the path B of FIG. 7. As a result, the vehicle body 9 can be electrically insulated from the high voltage first battery module 42 and the high voltage second battery module 44.

### First Modification

In the embodiment, the vehicle body 9 is electrically insulated from the high voltage first battery module 42 and the high voltage second battery module 44 by placing a non-electrically conductive material in the path A or the path B. However, the present disclosure is not limited to this, and the vehicle body 9 need only be electrically insulated from the high voltage first battery module 42 and the high voltage second battery module 44 in the path A or the path B.

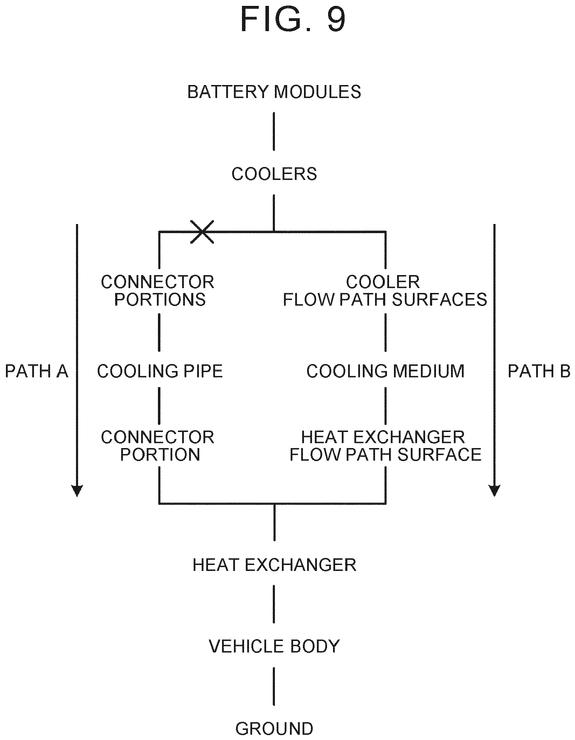

FIG. 9 schematically shows the state of the path A in the electrical conduction path including the first battery module 42 and the second battery module 44 according to a first modification of the embodiment.

As shown in the path A of FIG. 9, in the vehicle 1, the first cooler 41, the second cooler 43, and the third cooler 45 are connected to the cooling pipe 5 via the connector portions 10 made of a non-electrically conductive material. That is, in the vehicle 1, the connector portions 10 can electrically insulate between each of the first cooler 41, the second cooler 43, and the third cooler 45 and the cooling pipe 5 in the path A of FIG. 9.

According to the first modification of the embodiment described above, the vehicle body 9 can be electrically insulated from the first battery module 42 and the second battery module 44 in the path A.

In the first modification of the embodiment, the cooling pipe 5 located in the path A of FIG. 9 may be made of a non-electrically conductive material such as rubber to electrically insulate the vehicle body 9 from the first battery module 42 and the second battery module 44.

In the first modification of the embodiment, the heat exchanger 7 and the cooling pipe 5 may be connected via the connector portion 10 in the path A of FIG. 9 to electrically insulate the vehicle body 9 from the first battery module 42 and the second battery module 44.

### Second Modification

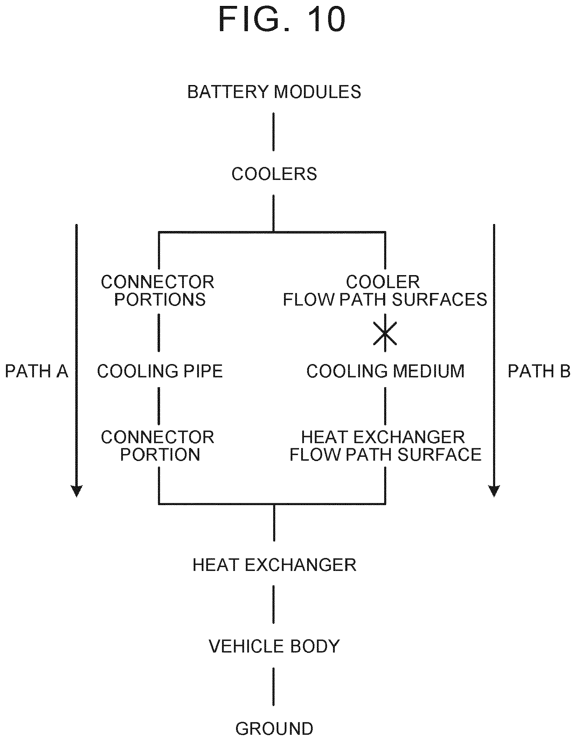

FIG. 10 schematically shows the state of the path B in the electrical conduction path including the first battery module 42 and the second battery module 44 according to a second modification of the embodiment.

As shown in the path B of FIG. 10, in the vehicle 1, the insulating coatings 430 (see FIG. 8) can electrically insulate between the cooling medium Wa and the surfaces of the flow paths 420 of the second cooler 43 in the path B of FIG. 10.

According to the second modification of the embodiment described above, the vehicle body 9 can be electrically insulated from the first battery module 42 and the second battery module 44 in the path B.

In the second modification of the embodiment, an insulating cooling medium may be used as the cooling medium Wa in the path B of FIG. 10 to electrically insulate the vehicle body 9 from the first battery module 42 and the second battery module 44.

In the second modification of the embodiment, an insulating coating may be formed on the inner peripheral surface of the flow path of the heat exchanger 7 through which the cooling medium Wa flows by insulation painting or anodizing in the path B of FIG. 10 to electrically insulate the vehicle body 9 from the first battery module 42 and the second battery module 44.

### Other Embodiments

Further effects and modifications can be readily derived by those skilled in the art. The broader aspects of the invention are not to be construed as limited to such specific details and representative embodiments as given and described specifically. Various modifications can therefore be made without departing from the spirit or scope of the overall concept of the invention as defined by the attached claims and their equivalents.

## Claims

1. A battery pack (4), comprising:
a first battery module (42) and a second battery module (44) each including multiple battery cells that are stacked together; and
a cooler (43) located between the first battery module (42) and the second battery module (44), configured to cool the first battery module (42) and the second battery module (44), and including an electrically conductive member.

2. The battery pack (4) according to claim 1, wherein the cooler (43) is in contact with and connected to the first battery module (42) and the second battery module (44).

3. The battery pack (4) according to claim 1 or 2, wherein:
the cooler (43) includes a plurality of flow paths through which a cooling medium circulates; and
the flow paths are located within a projected area that is defined by projecting the first battery module (42) and the second battery module (44) on a plane perpendicular to a direction in which the battery cells are stacked.

4. The battery pack (4) according to any one of claims 1 to 3, wherein:
the cooler (43) is located on the first battery module (42); and
the second battery module (44) is located on the cooler (43).

5. The battery pack (4) according to any one of claims 1 to 4, wherein:
the first battery module (42) and the second battery module (44) include an active material coated region (W1) coated with an active material; and
an area of a surface of the cooler (43) that is perpendicular to a direction in which the battery cells are stacked is equal to or larger than an area of the active material coated region (W1).

6. The battery pack (4) according to any one of claims 1 to 5, wherein the cooler (43) is connected via a connector portion made of a non-electrically conductive material to a cooling pipe configured to supply a cooling medium.

7. The battery pack (4) according to any one of claims 1 to 5, wherein:
the cooler (43) is connected to a cooling pipe configured to supply a cooling medium; and
the cooling pipe is made of a non-electrically conductive material.

8. The battery pack (4) according to any one of claims 1 to 5, wherein:
the cooler (43) is connected to a cooling pipe configured to supply a cooling medium; and
the cooling pipe is connected to a heat exchanger via a connector portion made of a non-electrically conductive material.

9. The battery pack (4) according to any one of claims 1 to 5, wherein:
the cooler (43) is connected to a cooling pipe configured to supply a cooling medium; and
the cooling pipe includes an insulating coating provided on a surface of the cooling pipe by insulation painting or anodizing.

10. The battery pack (4) according to any one of claims 1, 2, and 4 to 9, wherein the cooler (43) includes a plurality of flow paths through which a cooling medium circulates.

11. The battery pack (4) according to at least one of claims 3 and 10, wherein the cooler (43) includes an insulating coating provided on an inner peripheral surface of each of the flow paths by insulation painting or anodizing.

12. The battery pack (4) according to at least one of claims 3 and 10, wherein the cooling medium is an insulating cooling medium.

13. The battery pack (4) according to at least one of claims 3 and 10, wherein:
the cooler (43) is connected to a cooling pipe configured to supply the cooling medium; and
the cooling pipe is connected to a heat exchanger including an insulating coating provided by insulation painting or anodizing on an inner peripheral surface of a flow path of the heat exchanger through which the cooling medium flows.

14. The battery pack (4) according to any one of claims 1 to 13, wherein the electrically conductive member is configured to be electrically connected to the first battery module (42) and the second battery module (44).

15. The battery pack (4) according to any one of claims 3 and 6 to 14, wherein the cooling medium is a liquid.

16. A vehicle (1) comprising the battery pack (4) according to any one of claims 1 to 15.
